# EUROPEAN PATENT APPLICATION

(11) **EP 3 336 719 A1**
(43) Date of publication of application: **20.06.2018**
(21) Application number: 16835000.7
(22) Date of filing: 29.07.2016
(51) Int. Cl.: G06F 17/30, G06F 19/00, G06N 5/04

(54) **FUTURE SCENARIO GENERATION DEVICE AND METHOD, AND COMPUTER PROGRAM**

(30) Priority: 12.08.2015 JP 2015159376
(71) Applicant: National Institute of Information and Communication Technology, Tokyo 184-8795 (JP)
(72) Inventor: HASHIMOTO, Chikara, Koganei-shi Tokyo 184-8795 (JP); TORISAWA, Kentaro, Koganei-shi Tokyo 184-8795 (JP); KLOETZER, Julien, Koganei-shi Tokyo 184-8795 (JP); OH, Jonghoon, Koganei-shi Tokyo 184-8795 (JP); TANAKA, Masahiro, Koganei-shi Tokyo 184-8795 (JP); MAIRIDAN, Wushouer, Koganei-shi Tokyo 184-8795 (JP)
(74) Representative: Vossius & Partner Patentanwälte Rechtsanwälte mbB
(86) International application number: PCT/JP2016/072362
(87) International publication number: WO 2017/026303

(57) **Abstract**

[Object] An object is to provide a future scenario generating device capable of generating a huge number of appropriate future scenarios. [Solution] A future scenario generating device 272 includes: phrase pair DB 92 storing a large number of causality phrase pairs; a causality network building device 290 building a causality network by linking, of the phrases stored in causality phrase pair DB 92, phrases connectable as causality, using as a start point a phrase forming a main part of a question received by a question input unit 280; a community detecting device 294 detecting a community in the causality network; and a future scenario generating unit 298 generating a future scenario by linking phrases connectable as causality and belonging to the same community as the phrase as the start point until a predetermined end condition is satisfied.

## Description

### TECHNICAL FIELD

The present invention relates to a technique for generating, from information in a huge amount of documents, information consisting of chained causalities promoting decision making taking every risk and chance into consideration, in a scope of coverage exceeding the extent of information in the documents.

### BACKGROUND ART

In the modem society where actions are complicated and of grand-scale and have global influences, it is essential how to predict the future. Preparation based on the prediction would prevent an "unexpected contingency." Such a prediction is essential to make well-balanced, appropriate decisions in politics, economics and other various situations of everyday living.

Considering the current status where we have a formidable amount of ever-changing information to be considered, right prediction would be difficult to make if we rely on limited knowledge and imagination of an individual or of an organization. Though prediction of limited events with limited scope of data has been practically used as in the case of weather forecast, no one has ever conceived applying such an idea to the social movements, except for the concept disclosed in Patent Literature 1 below.

A computer is a powerful tool reinforcing one's ability. By way of example, computers have decided superiority in memorizing information over an individual's ability. Further, highly advanced techniques of natural language processing have been developed. Question-answering systems making full use of such information storage ability and the natural language processing techniques have been realized, and now they can provide, with high accuracy, correct answers to questions formulated in natural languages.

Such prior art techniques, however, cannot provide an answer to questions such as "what-if" type, though they can provide answers to a so-called "factoid" type question of "what is XX?" The system disclosed in Patent Literature 1 proposes a solution to such a problem, for predicting events that could happen in the future, considering every risk and chance using computer power. Practical application of such a device would be helpful for better decision making by people. According to Patent Literature 1, information referred to as a "social scenario" consisting of chained causalities is generated for such a prediction.

Fig. 1 is a schematic illustration of the question-answering system disclosed in Patent Literature 1. Referring to Fig. 1, assume that a user 30 enters to a social scenario output unit 36 a "what-if" type question 32, i.e., "What if smartphones achieve widespread use?" Social scenario output unit 36 is connected to a social scenario DB 34 including a huge number of social scenarios generated from causality phrase pairs (as will be described later) collected beforehand from the Internet. Social scenario output unit 36 retrieves a number of social scenarios starting from the causality having a cause corresponding to the question 32, among the social scenarios stored in social scenario DB 34, scores the retrieved social scenarios and then displays social scenarios 38 in descending order of scores. User 30 can follow a tree of causality providing an answer of interest, from the displayed social scenarios 38.

The causality phrase pair as used herein refers to a set of a phrase (cause phrase) describing some event or action as a cause, and a phrase (result phrase) describing its resultant event or action.

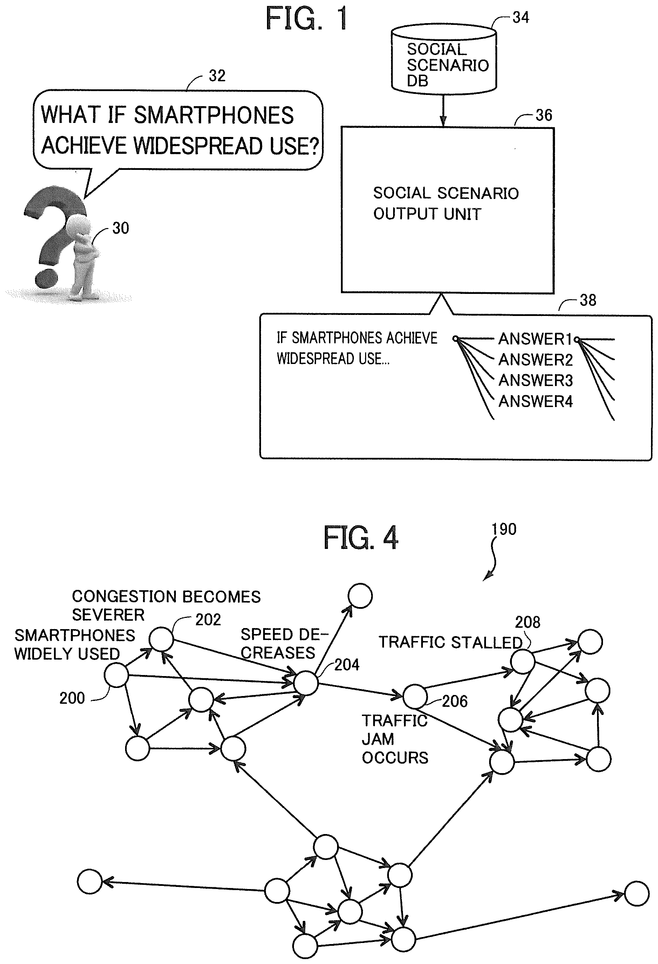

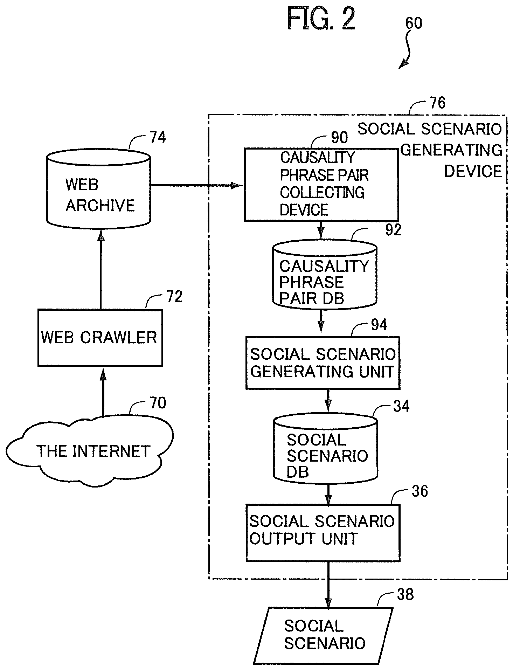

Referring to Fig. 2, a social scenario generating system 60 generating social scenarios 38 shown in Fig. 1 has such a configuration as follows. Social scenario generating system 60 includes: a WEB crawler 72 collecting a huge number of documents from the Internet 70; a WEB archive 74 storing the collected documents in a computer readable format; and a social scenario generating device 76 for generating social scenarios 38 from WEB archive 74.

Social scenario generating device 76 includes: a causality phrase pair collecting device 90 for collecting causality phrase pairs from the documents stored in WEB archive 74; causality phrase pair DB 92 storing the causality phrase pairs collected by causality phrase pair collecting device 90 in such a manner that any phrase pair can be accessed and retrieved at least by using its cause phrase as a key; a social scenario generating unit 94 generating a large number of social scenarios by successively linking, among the large number of causality phrase pairs stored in causality phrase pair DB 92, a certain causality phrase pair with another causality phrase pair having as a cause phrase the result phrase of the certain phrase pair; a social scenario DB 34 storing the social scenarios generated by social scenario generating unit 94; and social scenario output unit 36 responsive to a question from a user for extracting social scenarios 38 appropriate as answers from social scenario DB 34, and ranking and outputting the same. In the chained causality, even if a result phrase of a causality phrase pair in the former half of the chain and a cause phrase in the latter half of the causality have different character sequences, these phrases are chained provided that they have semantic consistency (in Patent Literature 1, this consistency is referred to as "causal consistency" as it means semantic consistency regarding causality).

Causality phrase pair collecting device 90 collects a huge number of causality phrase pairs from WEB archive 74 and stores them in causality phrase pair DB 92. Social scenario generating unit 94 generates a social scenario having causality chain, by repetitively linking, among causality phrase pairs stored in causality phrase pair DB 92, a certain causality phrase pair to another causality phrase pair having a cause phrase that can be linked to (i.e., has causal consistency with) the result phrase of the certain phrase pair. Generally, there would be a plurality of causality phrase pairs that have cause phrases having causal consistency with the result phrase of a single causality phrase pair. Therefore, the number of social scenarios increases exponentially as the number of links of causal phrase pairs becomes larger. These social scenarios are stored in social scenario DB 34. When a user poses some question to social scenario output unit 36, social scenario output unit 36 generates a cause phrase from the contents of the question, retrieves social scenarios 38 having the cause phrase as a start point from social scenario DB 34, and presents them to the user. At this time, the presented social scenarios are scored based on a relation with the question, and presented to the user in descending order of scores.

### CITATION LIST

### PATENT LITERATURE

PTL 1: JP2015-121897A

### NON PATENT LITERATURE

NPL 1: Gergely Palla, Imre Derenyi, Illes Farkas, and Tamas Vicsek, 2005, Uncovering the overlapping community structure of complex networks in nature and society. Nature, 435:814-818.

### SUMMARY OF INVENTION

### TECHNICAL PROBLEM

By the technique described in Patent Literature 1 above, we can obtain a huge number of social scenarios. Very useful social scenarios are often contained therein. When the number of documents stored in WEB archive 74 increases, however, the number of social scenarios we obtain increases. Therefore, there arises a problem that the social scenarios tend to include practically impossible or meaningless scenarios.

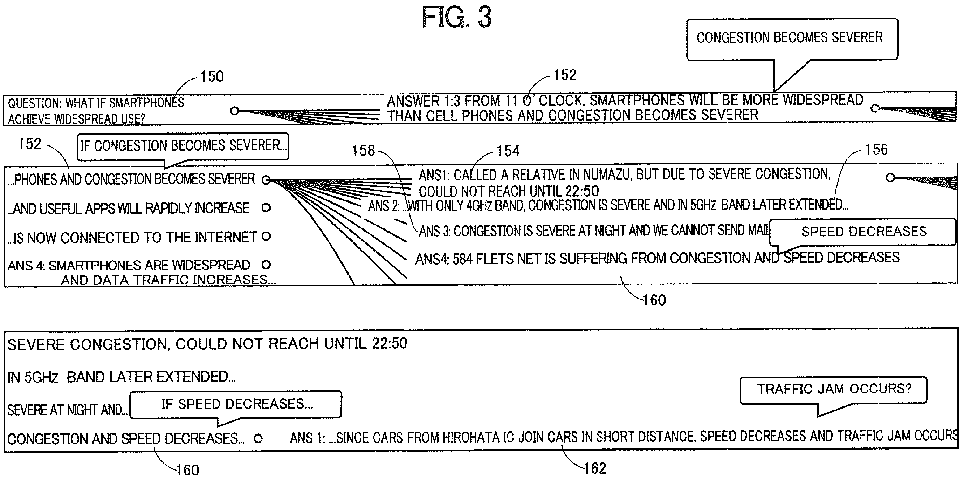

By way of example, referring to Fig. 3, assume that a plurality of answers including an answer 152 is obtained in response to a question 150, i.e., "What if smartphones achieve widespread use?" Further, assume that answers 154, 156, 158, 160 and 162 are obtained as a chain following the answer 152. Among these, according to answer 160, "when congestion becomes severe," "speed decreases," which leads to a social scenario that "traffic jam occurs" as described in answer 162." Considering the relation from the first question 150, the conclusion is that when smartphones achieve widespread use, traffic jam occurs. This context cannot be a reasonable inference and considering the causality chain shown in Fig. 3, it cannot be a correct inference.

The technique described in Patent Literature 1 has the effect that results of inference not expected by humans can be obtained as it provides a huge number of social scenarios. On the other hand, it also provides a huge number of irrelevant scenarios such as described above, posing a serious problem when using the social scenarios.

In the embodiments of the present application, in order to emphasize the characteristic that we predict future from a certain question, we use the term "future scenario" in place of "social scenario."

Therefore, an object of the present invention is to provide a future scenario generating device and method that can generate a huge number of appropriate future scenarios, as well as to provide a computer program for that purpose.

### SOLUTION TO PROBLEM

According to a first aspect, the present invention provides a future scenario generating device, including: phrase pair storage means for storing a large number of causality phrase pairs; causality network building means for building a causality network, by linking, among the phrases stored in the phrase pair storage unit, phrases connectable as causality; community detecting means for detecting a community in the causality network built by the causality network building means; initial phrase selecting means for selecting any phrase as an initial phrase; and future scenario generating means for generating a future scenario, by linking, using the initial phrase selected by the initial phrase selecting means as a start point, causality pairs belonging to the same community as the initial phrase until a predetermined end condition is satisfied.

Preferably, the community detecting means includes means for detecting a community in the causality network applying clique percolation method (CPM) on the causality network.

More preferably, the means for detecting a community uses, in k-clique detection while executing CPM, an integer k selected from the range of k = 3 to 6.

More preferably, the initial phrase selecting means includes means for selecting, based on a question sentence input by a user, a phrase having causal consistency with a main part of the question sentence as the initial phrase.

According to a second aspect, the present invention provides a future scenario generating method, including the steps of: a computer storing a large number of causality phrase pairs in phrase pair storage means; a computer generating a causality network by linking, among the phrases stored in the phrase pair storage unit, phrases connectable as causality; a computer detecting a community in the causality network; a computer selecting any phrase stored in the storage means as an initial phrase; and a computer generating a future scenario, by linking, using the initial phrase as a start point, phrases connectable as causality and belonging to the same community as the initial phrase in the causality network until a predetermined end condition is satisfied.

According to a third aspect, the present invention provides a computer program causing a computer to function as all means of any of the future scenario generating devices described above.

### BRIEF DESCRIPTION OF DRAWINGS

Fig. 1 schematically shows a function of a question-answering system generating answers to a "what-if" type question.
Fig. 2 is a block diagram of the conventional social scenario generating system described in Patent Literature 1.
Fig. 3 illustrates a problem of the social scenario generating system described in Patent Literature 1.
Fig. 4 is a schematic diagram of a causality network.
Fig. 5 schematically illustrates a concept of a community in SNS.
Fig. 6 is a schematic diagram showing formation of a community in the causality network in accordance with the present invention.
Fig. 7 is a block diagram of a future scenario generating device in accordance with a first embodiment of the present invention.
Fig. 8 is a block diagram of the future scenario generating unit shown in Fig. 7.
Fig. 9 is a block diagram of a future scenario generating device in accordance with a second embodiment of the present invention.
Fig. 10 is a block diagram of a future scenario generating device in accordance with a third embodiment of the present invention.
Fig. 11 shows an appearance of a computer for realizing the future scenario generating systems in accordance with the embodiments of the present invention.
Fig. 12 is a block diagram showing hardware configuration of the computer shown in Fig. 11.

### DESCRIPTION OF EMBODIMENTS

In the following description and in the drawings, the same components are denoted by the same reference characters. Therefore, detailed description thereof will not be repeated.

Though the following description is directed to Japanese, future scenario generating device similar to those of the embodiments of the present invention can be obtained in the languages other than Japanese by using similar methods as the embodiments disclosed in the present specification and by considering the characteristics of the language of interest.

Let us consider the reason why such a situation as shown in Fig. 3 occurs. Referring to Fig. 4, assume that in a causality network 190 obtained in the above-described manner, a node 200 corresponds to the question 32 shown in Fig. 1. Further, assume that, corresponding to a causality phrase pair having question 32 in the cause phrase, there is an edge from node 200 to a node 202 ("congestion becomes severe"), and that from a causality phrase pair having "congestion becomes severe" in the cause phrase, there is an edge from node 202 to a node 204 ("speed decreases"). Then, a causality phrase pair having "speed decreases" in the cause phrase leads to a result phrase "traffic jam occurs" of a node 206, and further leads to "traffic is stalled" of a node 208. Here, the edge from node 204 to 206 is actually related not to smartphones but to automobiles. Patent Literature 1 focuses only on the text of causality phrases and, therefore, social scenarios will be generated as well from causality phrases unrelated to the original question 32. This is the reason why causality chains unrelated to the original question slip into the social scenarios generated in accordance with Patent Literature 1.

As a solution to this problem, an approach may be conceivable that focuses on the text forming causality phrases to narrow social scenarios by. Such an approach, however, may be too much dependent on intuition or may be unable to allow selection on clear criterion because the criterion is arbitrary. Therefore, it is preferable to find a method of narrowing social scenarios focusing on a factor other than the text.

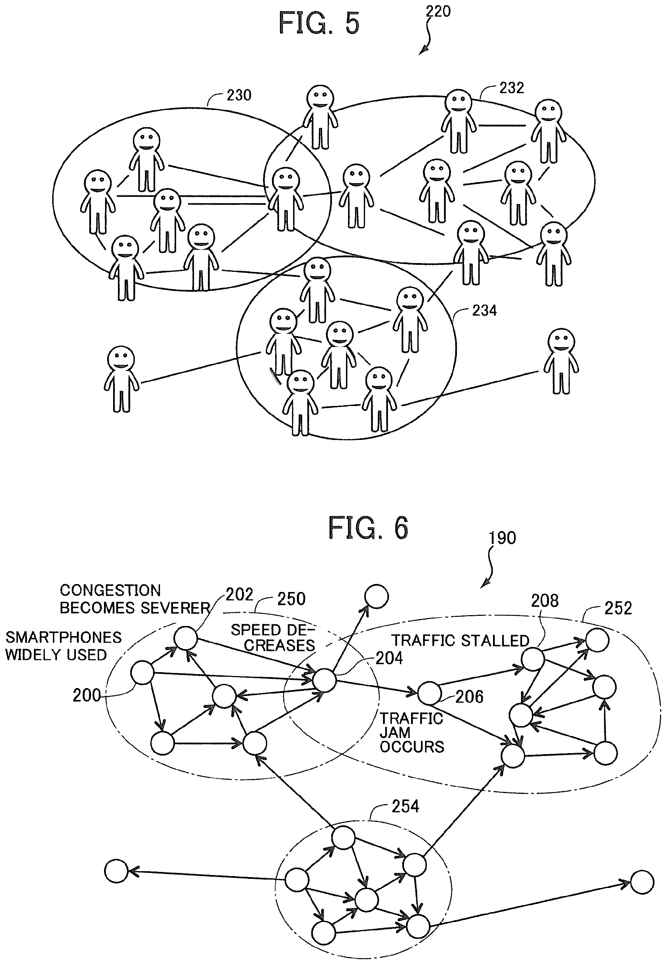

In this regard, the inventors of the present invention noted a technique for finding an undetected lower level unit forming a network in SNS (Social Networking Service) described in Non-Patent Literature 1, which is directed to a technical field not related to the generation of future scenarios for which the present invention is aiming. This technique is mainly used for finding a community in a network in SNS, or for classifying proteins focusing on structural similarities among various proteins. Referring to Fig. 5, in a certain SNS network 220, it is possible by the method disclosed in Non-Patent Literature 1 to find groups 230, 232, 234 and the like formed by some persons more tightly knitted with each other than others. Such groups are referred to as communities. A community is also referred to as a cluster, a group or a module. By combining this method with the technique disclosed in Patent Literature 1 to exclude linking causality having weak relations and thereby to adopt only the useful future scenarios, the invention disclosed in Patent Literature 1 becomes more usable.

Therefore, in each of the embodiments below, in a causality network 190 shown in Fig. 4, nodes are classified into a community 250 comprised of causality phrases related to smartphones and communities 252, 254 and others each comprised of causality phrases related to other topics, as shown in Fig. 6. When future scenarios are to be generated from causality phrase pairs, and future scenarios are to be generated from a certain starting causality phrase pairs, only those causality phrase pairs in that community to which the start point pair belongs are used. Note that, in the present embodiment, one node may belong to a plurality of communities.

As described above, by using the community detecting technique for SNS, when the future scenarios are to be generated from a certain causality phrase pair and following causality relations, the possibility of causality phrases unrelated to the cause phrase of the original causality phrase slipping into future scenarios becomes lower, and the possibility that only the meaningful future scenarios result becomes higher. Further, since this method does not directly based on the text forming the causality phrase pairs, it can be effectively applied no matter what language is used in the source documents, without any modification to the method.

### <First Embodiment>

### [Configuration]

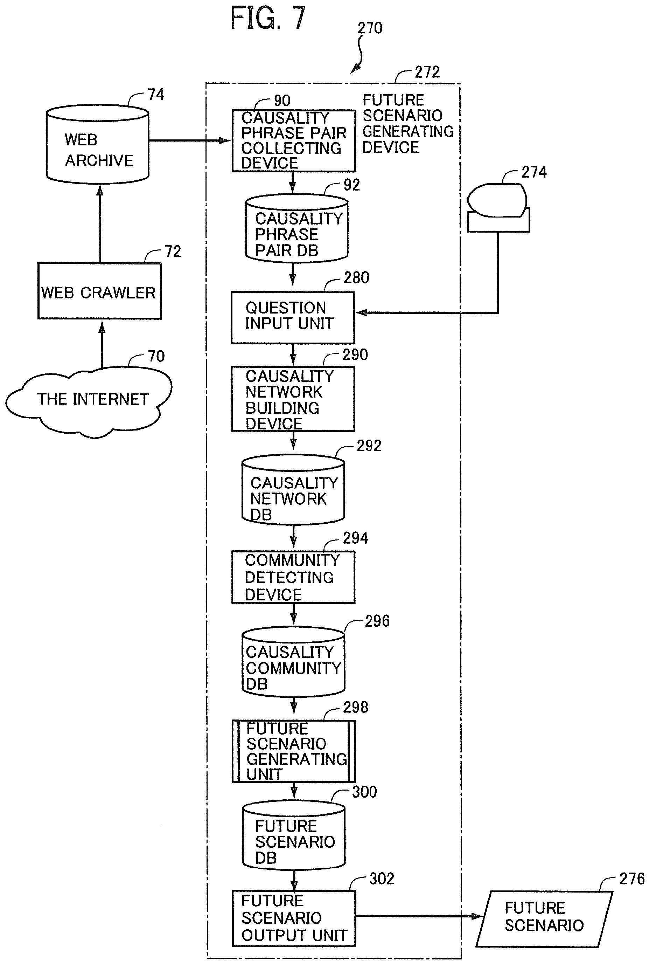

Referring to Fig. 7, a future scenario generating system 270 in accordance with a first embodiment of the present invention includes a future scenario generating device 272 that generates future scenarios roughly in accordance with the same method as described in Patent Literature 1 based on WEB archive 74, but from only those causality phrase pairs belonging to the same community.

Future scenario generating device 272 includes: causality phrase pair collecting device 90 and causality phrase pair DB 92 similar to those shown in Fig. 2; a question input unit 280 for receiving a question input from a user by interaction through an input/output device 274; a causality network building device 290 for building a causality network (graph) from the causality phrase pairs stored in causality phrase pair DB 92 using a phrase having causal consistency with the main part of the question received by the question input unit 280 as an initial phrase, such that the causality network has nodes corresponding to the cause and result phrases in the causality relations, and edges corresponding to lines connecting nodes representing two phrases coupled by causality relation; and a causality network DB 292 for storing data describing the causality network built by causality network building device 290. In the causality network, each node serves as a result phrase with reference to the node in the preceding stage connected thereto, while it serves as a cause phrase with reference to the node in the succeeding stage connected thereto.

In a chain of phrases in causality network building device 290, as in Patent Literature 1, even when the result phrase of a causality phrase pair in the former half of the chain and the cause phrase of the causality phrase pair of the latter half do not have the same character sequences, these phrases are linked if they have causal consistency.

When such causality link is to be formed, it is easy to determine a link if the result phrase of certain causality phrase pair is identical with the cause phrase of another causality phrase pair. Actually, however, there is such a relation between phrases that can establish a link between two causality phrase pairs, even though the phrases have different character sequences. If such a relation is overlooked, the scope of generated scenarios could be too narrow. Therefore, when considering a result phrase of a certain causality phrase pair and a cause phrase of another causality phrase pair that can be a linking part of two causality phrase pairs, it is important to find a relation that allows identification of these two phrases as substantially the same, even if they do not have identical character sequences.

In the present embodiment, as in Patent Literature 1, even when the phrases are not identical in character sequences, the phrases are linked if they have causal consistency. As mentioned in Patent Literature 1, the causal consistency is a new idea encompassing paraphrasing and entailment, which cannot be realized by the conventional natural language processing techniques only. For any two causality phrase pairs, causality network building device 290 evaluates causal consistency between the result phrase of one pair and the cause phrase of the other, and links causality phrase pairs having causal consistency.

In determining whether or not they have causal consistency, various criteria are used. First, among phrases forming the causality network, phrases having the same noun and having predicate templates representing the structure of the phrase of the same polarity are regarded as synonymous phrases having causal consistency.

Predicate templates are classified as simple predicate templates or complex predicate templates. In Japanese, a combination of a particle and a predicate (example: <o, taberu> (eat XX)), connecting one particle with one predicate will be referred to as a "simple predicate template." Examples may include "ga shinko suru (something proceeds)," "o fusegu (prevent something)," "ga kengen suru (something emerges)." Here, in a sentence, immediately preceding the particle forming a simple predicate template, a subject, an object or the like of the predicate is positioned. In Japanese, a combination connecting a particle " 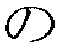 (pronounced 'no')," a noun, and a simple predicate template will be referred to as a "complex predicate template." In the present embodiment, only the documents in Japanese will be discussed and hence, definitions as above are used. The definitions of simple predicate template and complex predicate template naturally differ language by language.

Polarity is a concept introduced to represent the characteristics of a predicate template. In the present embodiment, three polarities, that is, excitatory, inhibitory and neutral, are used. Excitatory refers to the polarity of a predicate template that describes an event exhibiting or promoting a function, effect or the like of an object indicated by a subject, object or the like of the noun positioned immediately preceding the particle at the head of the predicate template in a sentence. Inhibitory refers to the polarity of a predicate template that describes an event that prevents exhibition of a function, effect or the like of an object. Neutral refers to the polarity of a predicate template to which the definition of neither excitatory nor inhibitory applies.

Further, in the present embodiment, phrase pairs having the same nouns and having the same evaluation polarities of the entire phrases, and phrase pairs having the same nouns and having templates appearing the similar contexts in a huge amount of documents are regarded as synonymous phrases having causal consistency. Whether or not the contexts of appearance are similar is determined by calculating in advance distribution similarities of templates.

The method of joining phrases is not limited to the above-described use of causal consistency between the two phrases. For example, causal consistency may be established if there is a semantic relation bridging a certain phrase to another phrase, though there is no causal consistency between the two phrases. Assume, for example, that one phrase is "sunlight is blocked" and the other phrase is "photosynthesis is prevented." Here, it is possible to consider a phrase "sunlight is necessary for photosynthesis" as a link bridging the two. Then, using this phrase as an intermediary, a phrase of "sunlight is blocked" and a cause phrase of "photosynthesis is prevented" may be linked.

Future scenario generating device 272 further includes: a community detecting device 294 for detecting a community in a causality network stored in causality network DB 292, by the method described in Non-Patent Literature 1, and for forming and outputting a new network (referred to as a causality network) by adding an identifier of a community to phrases corresponding to nodes forming the community; a causality community DB 296 storing the causality network; a future scenario generating unit 298 for generating a huge amount of future scenarios by tracking only the phrases belonging to the same community as that of the main part of the question received by question input unit 280, from the nodes corresponding to various phrases stored in causality community DB 296; a future scenario DB 300 for storing the future scenarios generated by future scenario generating unit 298; and a future scenario output unit 302 for ranking the future scenarios stored in future scenario DB 300 and outputting the results as answers to the question.

In the present embedment, a causality community is detected by a method referred to as clique percolation method (CPM). According to CPM, a complete sub-graphs consisting of k nodes (k is a positive integer), which is called a "k-clique", is extracted in a network (graph), and by connecting these, a community is detected. The complete sub-graph as used herein refers to such a sub-graph consisting k nodes all connected to each other by edges. For example, if k = 2, a k-clique consists of two nodes and one edge connecting these nodes. A 3-clique is a graph consisting of three edges connecting three nodes, having a triangular shape.

Two k-cliques are adjacent to each other when they share k-1 nodes. A community as used herein is a sub-graph comprised of a set of k-cliques reachable to each other via several adjacent k-cliques. This definition means that two communities can share a node or nodes, as described above.

Basic algorithms for community detection are disclosed in Non-Patent Literature 1 and its appended document. The appended document is available at
http://nature.com/nature/journal/v435/n7043/suppinfo/nature03607.html

Further, CPM is implemented as various programs. For Example, some are distributed at the following URLs:
http://www.cfinder.org
https://github.com/aaronmcdaid/MaximalCliques

In addition to the above, many algorithms for realizing CPM are provided, and various studies for increasing the speed of processing have been published.

It is noted that if the value of k is small, a community of a huge size close to the size of the whole network would be formed, and detection of a community becomes meaningless. On the other hand, if the value of k is large, each community becomes too small and diversity in generating future scenarios would be lost. In the method of community detection described in Non-Patent Literature 1, the preferable value of k is from 3 to 6. Therefore, in order to generate a sufficient number of future scenarios that are semantically appropriate, it is similarly desirable to select the value k from the range of k = 3 to 6. It goes without saying that use of CPM is possible with the value outside of this range, and depending on the state of causality network, the value k may be selected outside of this range. In the present embodiment, k = 4.

Community detection by CPM is performed on a so-called undirected graph, whereas the causality network in accordance with the present embodiment is a directed graph. In detecting a community in the present embodiment, the causality network is regarded as an undirected graph, to apply CPM.

For detecting a community, various methods are available other than CPM. Algorithms known for community detection include the following examples. Some of these are applicable not only to undirected graphs but also to directed graphs. Some allow one node belonging to a plurality of communities, while others do not. Any of the following examples may be used for detecting a community in a network (graph) in accordance with the present embodiment.

Minimum-cut
Hierarchical clustering
Girvan-Newman algorithm
Modularity maximization
Ensemble-Based Modularity Maximization
Random Walks and Modularity Maximization
Support Maximization
Statistical inference
Speaker-listener Label Propagation
Locality Sensitive Hashing
Disjoint Community Detection
Matrix Blocking via Cosine Similarity

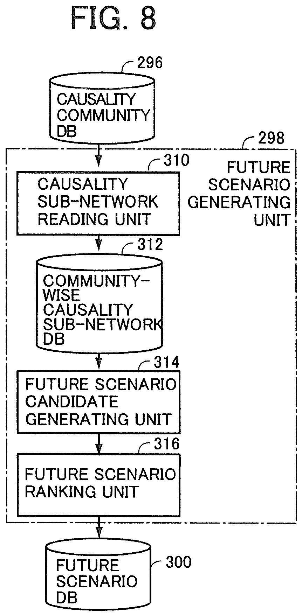

Referring to Fig. 8, future scenario generating unit 298 includes: a causality sub-network reading unit 310 for separately reading sub-networks consisting only of phrases having the same community identifiers, from causality networks having community identifiers added, stored in causality community DB 296; a communitywise causality sub-network DB 312 for storing, separate from each other, the causality sub-networks read by causality sub-network reading unit 310; a future scenario candidate generating unit 314 for generating and outputting a plurality of future scenario candidates by linking phrases that can be linked based on causality, using an initial phrase selected by question input unit 280 as a start point, for each sub-network stored in communitywise causality sub-network DB 312, while changing the initial phrases; and a future scenario ranking unit 316 for storing the future scenario candidates output from future scenario candidate generating unit 314, ranking the same in accordance with prescribed scores representing relevance as a future scenario, and outputting the results to future scenario DB 300. Each sub-network forms a community. Therefore, when phrases belonging to the same sub-network as that of the initial phrase are linked, a future scenario linking only the causality belonging to the same community can be obtained.

In future scenario candidate generating unit 314, the process of generating each future scenario from the initial phrase is terminated when a prescribed condition is satisfied. For example, when the number of phrases linked from the initial phrase reaches a prescribed number, generation of the future scenario may be finished. Alternatively, the process may be terminated when a phrase to be linked can no longer be found in the community.

### [Operation]

Referring to Figs. 7 and 8, future scenario generating system 270 in accordance with the first embodiment operates in the following manner. WEB crawler 72 collects a huge amount of documents from sites on the Internet 70, and stores them in WEB archive 74. When collection of documents in WEB archive 74 ends, causality phrase pair collecting device 90 collects a huge amount of causality phrase pairs from the documents stored in WEB archive 74. The method is as described in Patent Literature 1. The collected causality phrase pairs are stored in causality phrase pair DB 92.

Causality network building device 290 searches the causality phrase pairs stored in causality phrase pair DB 92 for any two pairs where the result phrase of the pair and the cause phrase of the other pair has causal consistency with each other, links these pairs, and by repeating this operation for every causality, generates a causality network and stores it in causality network DB 292.

Community detecting device 294 detects communities, in the causality network described by the information stored in causality network DB 292, using CPM realizing the method described in Non-Patent Literature 1, generates information describing a new causality network (causality community) by adding, to each causality phrase pair, an identifier indicating the community to which it belongs, and stores the results to causality community DB 296.

Referring to Fig. 8, causality sub-network reading unit 310 reads sub-networks consisting of causality phrase pairs belonging to each community from causality community DB 296, and stores them in respective sub-networks, in communitywise causality sub-network DB 312. Future scenario candidate generating unit 314 generates a large number of future scenario candidates by successively linking, for each of the communitywise sub-networks stored in communitywise causality sub-network DB 312, phrases in the sub-network in accordance with the presence/absence of causality, and applies the generated candidates to future scenario ranking unit 316. Since this process is executed for each sub-network, a large number of future scenarios, in which only the phrases belonging to each community are linked, are generated.

Future scenario ranking unit 316 stores the generated future scenarios. When generation of all future scenarios ends, future scenario ranking unit 316 ranks these in accordance with prescribed scores, generates a future scenario display image having scenarios of higher ranks arranged near the root and allowing tracking of each causality, and displays it on a display device, not shown. The display device is controlled such that a requested future scenario is displayed in response to a user's instruction.

As described above, according to the present embodiment, a causality network is built from the causality phrase pairs, and from the causality network, communities are detected. Future scenario candidates are generated only from the phrases belonging to the same community. Therefore, there is little possibility that phrases belonging to different communities are erroneously mixed in a generated future scenario, and hence, we can obtain only the future scenarios semantically consistent. Detection of a community is determined only by the topology of the network. The text forming the causality phrase pairs are not used. Therefore, this method can provide useful future scenarios regardless of the languages in which the causality phrase pairs are described.

### <Second Embodiment>

In the first embodiment above, as shown in Fig. 7, a community is detected from a causality network stored in causality network DB 292, a new DB (causality community DB) is formed in which each causality phrase pair has a community identifier added thereto, and from here, sub-networks are built community by community. The present invention, however, is not limited to such an embodiment. For example, in place of newly building a causality community DB from a causality network DB, a field for storing a community identifier may be provided for each record in the causality network, and if a community to which the causality phrase pair corresponding to each record is found, its identifier may be stored in this field. The second embodiment is directed to such an approach.

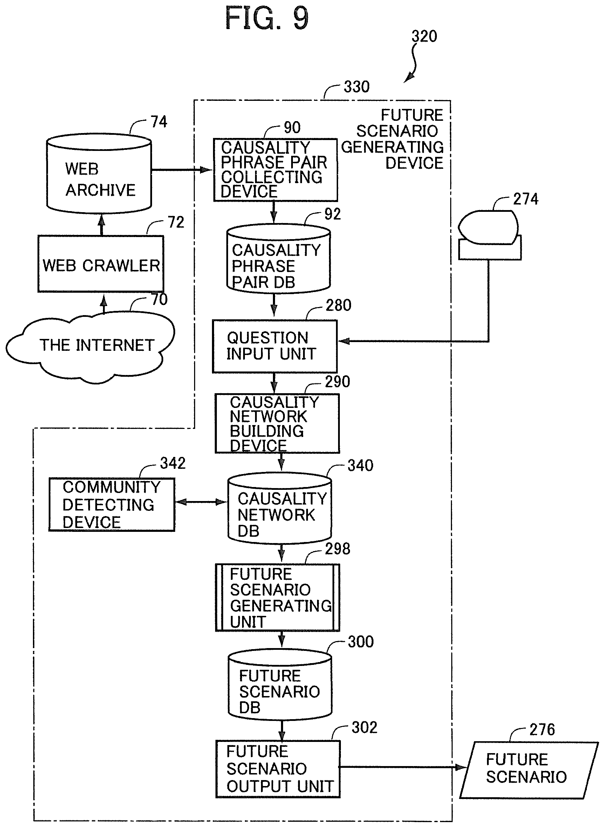

Referring to Fig. 9, future scenario generating system 320 in accordance with the second embodiment includes a future scenario generating device 330 in place of future scenario generating device 272 shown in Fig. 7.

Future scenario generating device 330 is different from future scenario generating device 272 in that it does not include causality network DB 292, community detecting device 294 or causality community DB 296 of Fig. 7, and in place of these it includes a causality network DB 340 comprised of records of causality networks, each having a field for community identifier provided in advance, as described above. Future scenario generating device 330 is also different from future scenario generating device 272 in that it includes a community detecting device 342, which detects communities from the causality network represented by information stored in causality network DB 340, sets the identifier field of the record of each causality phrase pair to the identifier of the community to which the causality phrase pair belongs, and updates the record.

The second embodiment is characterized in that in place of newly building causality community DB 296 from causality network DB 292, causality sub-network reading unit 310 is updated and thereby information similar to that of causality community DB 296 is obtained. Except for this point, the configuration and operation are the same as the configuration and operation of the first embodiment.

### <Third Embodiment>

In the first embodiment, causality community DB 296 is built from causality network DB 292. In the second embodiment, causality network DB 340 is updated by the community identifier, so that causality network DB 340 has the information similar to that of causality community DB 296. The present invention, however, is not limited to such embodiments. In the third embodiment, the causality network DB itself is unchanged, and a list of communities and causality phrase pairs belonging to the communities (referred to as a community list) is saved as a separate file.

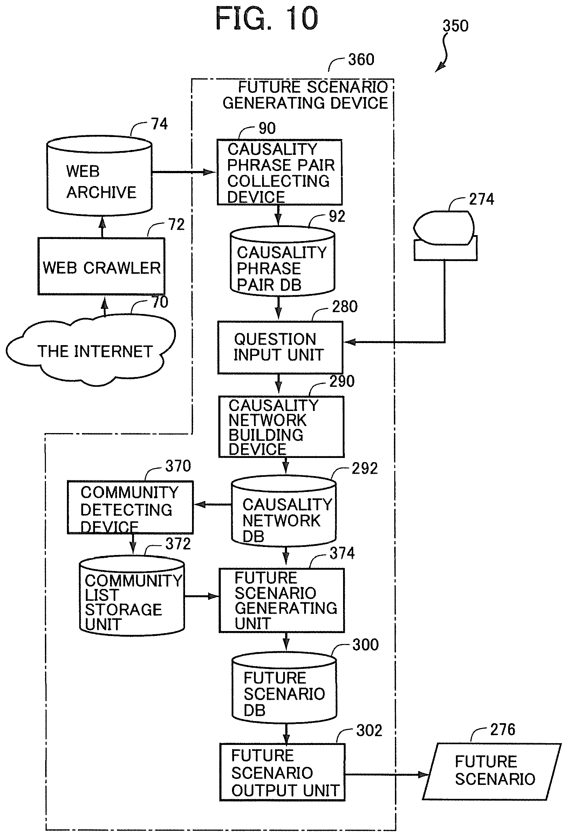

Referring to Fig. 10, a future scenario generating system 350 in accordance with the third embodiment is different from future scenario generating system 270 shown in Fig. 7 in that it includes a future scenario generating device 360 in place of future scenario generating device 272.

Different from future scenario generating device 272 shown in Fig. 7, future scenario generating device 360 includes, in place of community detecting device 294, causality community DB 296 and future scenario generating unit 298 of Fig. 7, a community detecting device 370 detecting communities from the causality network described by the information stored in causality network DB 292, and outputting, for each community, a community list comprised of an identifier of the community and a list of identifiers of causality phrase pairs belonging to the community, a community list storage unit 372 storing the community lists, and a future scenario generating unit 374 generating and outputting future scenarios for each community, with reference to the community lists stored in community list storage unit 372.

In the third embodiment, community detecting device 370 detects communities of a causality network based on the information stored in causality network DB 292, and stores, for each community, a community list in community list storage unit 372.

Future scenario generating unit 374 reads the community list stored in community list storage unit 372, and for each community, reads causality phrase pairs forming the community from causality network DB 292, generates a future scenario and outputs it to future scenario DB 300.

According to the third embodiment, every time the future scenario generating device 360 generates a community list related to a certain community and outputs it to community list storage unit 372, it is possible for future scenario generating unit 374 to perform processing related to that community. Specifically, community detection by future scenario generating device 360 and generation of future scenario by future scenario generating unit 374 can be executed in a simultaneous and parallel manner.

Except for this point, the configuration and operation of future scenario generating device 360 are the same as those of future scenario generating device 272 shown in Fig. 7.

The future scenario generating systems in accordance with the embodiments above all build a causality network after receiving a question and generate future scenarios from the built causality network. The present invention, however, is not limited to such embodiments.

For example, for each phrase stored beforehand in causality phrase pair DB 92, an overall causality network may be built so that a causality network having that phrase as a start point can be obtained, and community detection may be done in advance. In this case, when a question is input, at first, determination is made as to which community a phrase semantically the same as the question belongs, and future scenarios may be generated only from the phrases belonging to this community.

By further advancing this approach, all future scenarios may be generated in advance and stored in future scenario DB 300. Each future scenario is adapted to store an identifier of the community to which the phrase used for generating the future scenario belongs. When a question is input, a future scenario having as a start point a phrase having the same meaning as the question, and having the same community identifier, is searched and output. In this manner, a future scenario appropriate for the question can be selected and displayed.

### [Computer Implementation]

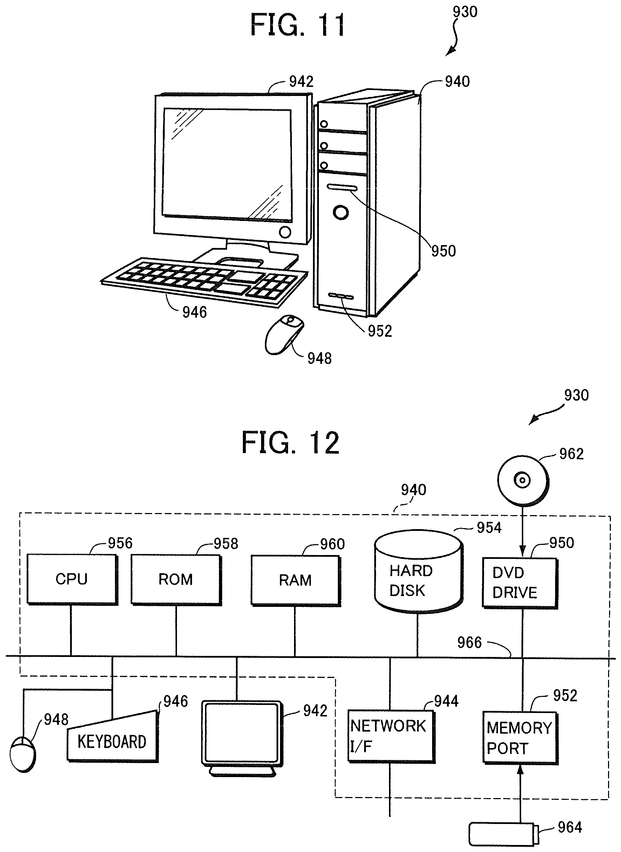

The system in accordance with the embodiments above can be implemented by computer hardware and computer programs executed on the computer hardware. Fig. 11 shows an appearance of computer system 930 and Fig. 12 shows an internal configuration of computer system 930.

Referring to Fig. 11, computer system 930 includes a computer 940 having a memory port 952 and a DVD (Digital Versatile Disk) drive 950, a keyboard 946, a mouse 948, and a monitor 942.

Referring to Fig. 12, computer 940 includes, in addition to memory port 952 and DVD drive 950, a CPU (Central Processing Unit) 956, a bus 966 connected to CPU 956, memory port 952 and DVD drive 950, a read only memory (ROM) 958 storing a boot-up program and the like, and a random access memory (RAM) 960 connected to bus 966, storing program instructions, a system program and work data. Computer system 930 further includes a network interface (I/F) 944 providing the computer 940 with the connection to a network allowing communication with another terminal. Network I/F 944 may be connected to the Internet 70.

The computer program causing computer system 930 to function as each of the functioning sections of the system in accordance with each of the embodiments above is stored in a DVD 962 or a removable memory 964 loaded to DVD drive 950 or to memory port 952, and transferred to hard disk 954. Alternatively, the program may be transmitted to computer 940 through a network, not shown, and stored in hard disk 954. At the time of execution, the program is loaded to RAM 960. The program may be directly loaded from DVD 962, removable memory 964 or through a network to RAM 960.

The program includes a plurality of instructions to cause computer 940 to operate as functioning sections of the system in accordance with each of the embodiments above. Some of the basic functions necessary to realize the operation are provided by the operating system (OS) running on computer 940, by a third party program, or by a module of various programming tool kits installed in computer 940. Therefore, the program may not necessarily include all of the functions necessary to realize the system and method of the present embodiment. The program has only to include instructions to realize the functions of the above-described system by calling appropriate functions or appropriate program tools in a program tool kit in a manner controlled to attain desired results. The operation of computer system 930 is well known and, therefore, description thereof will not be given here.

The embodiments as have been described here are mere examples and should not be interpreted as restrictive. The scope of the present invention is determined by each of the claims with appropriate consideration of the written description of the embodiments and embraces modifications within the meaning of, and equivalent to, the languages in the claims.

### INDUSTRIAL APPLICABILITY

The present invention is applicable to provide decision making services considering risks and chances such as question-answering services; risk assessment services; auxiliary services for marketing research; and prediction of market trend in every industry, as well as to manufacturing of devices for that purpose.

### REFERENCE SIGNS LIST

34 social scenario DB
36 social scenario output unit
38 social scenario
60 social scenario generating system
70 the Internet
74 WEB archive
76 social scenario generating device
90 causality phrase pair collecting device
92 causality phrase pair DB
94 social scenario generating unit
190 causality network
250, 252, 254 community
270, 320, 350 future scenario generating system
272, 330, 360 future scenario generating device
290 causality network building device
292, 340 causality network DB
294, 342, 370 community detecting device
296 causality community DB
298, 374 future scenario generating unit
300 future scenario DB
302 future scenario output unit
310 causality sub-network reading unit
312 communitywise causality sub-network DB
314 future scenario candidate generating unit
316 future scenario ranking unit
372 community list storage unit

## Claims

1. A future scenario generating device, comprising:
phrase pair storage means for storing a large number of causality phrase pairs;
causality network building means for building a causality network, by linking, among the phrases stored in said phrase pair storage unit, phrases connectable as causality;
community detecting means for detecting a community in said causality network built by said causality network building means;
initial phrase selecting means for selecting any phrase as an initial phrase; and
future scenario generating means for generating a future scenario, by linking, using the initial phrase selected by said initial phrase selecting means as a start point, phrases connectable as causality and belonging to the same community as said initial phrase in said causality network until a predetermined end condition is satisfied.

2. The future scenario generating device according to claim 1, wherein said community detecting means includes means for detecting a community in said causality network applying clique percolation method (CPM) on said causality network.

3. The future scenario generating device according to claim 2, wherein said means for detecting a community uses, in k-clique detection while executing CPM, an integer k selected from the range of k = 3 to 6.

4. The future scenario generating device according to any of claims 1 to 3, wherein said initial phrase selecting means includes means for selecting, based on a question sentence input by a user, a phrase having causal consistency with a main part of said question sentence as said initial phrase.

5. A future scenario generating method, comprising the steps of:
a computer storing a large number of causality phrase pairs in phrase pair storage means;
a computer generating a causality network by linking, among the phrases stored in said phrase pair storage unit, phrases connectable as causality;
a computer detecting a community in said causality network;
a computer selecting any phrase stored in said storage means as an initial phrase; and
a computer generating a future scenario, by linking, using said initial phrase as a start point, phrases connectable as causality and belonging to the same community as said initial future scenario until a predetermined end condition is satisfied.

6. A computer program causing a computer to function as all means described in any of claims 1 to 4.
